# EUROPÄISCHE PATENTSCHRIFT

(11) **EP 3 298 267 B1**
(45) Veröffentlichungstag und Bekanntmachung des Hinweises auf die Patenterteilung: **23.04.2025**
(21) Anmeldenummer: 16735816.7
(22) Anmeldetag: 04.05.2016
(51) Int. Cl.: F02N 11/04, F02N 15/00

(54) **BRENNKRAFTMASCHINE MIT EINEM ELEKTROMOTOR**
COMBUSTION ENGINE WITH A ELECTRIC MOTOR
MOTEUR À COMBUSTION AVEC MOTEUR ÉLECTRIQUE

(30) Priorität: 20.05.2015 DE 102015006365
(43) Veröffentlichungstag der Anmeldung: 28.03.2018
(73) Patentinhaber: DEUTZ Aktiengesellschaft, 51149 Köln (DE)
(72) Erfinder: BRUN, Marco, 40764 Langenfeld (DE); FEUSER, Wilhelm, 53332 Bornheim (DE); KLEINSCHMIDT, Anton, 50321 Brühl (DE); KNAPS, Gerhard, 53844 Troisdorf (DE); JOISTEN-PIERITZ, Joachim, 53925 Kall-Steinfeld (DE); HOFFMANN, Peter, 50677 Köln (DE); JUNG- Marco, 51429 Bergisch-Gladbach (DE); SCHWABAUER, Paul, 56410 Montabaur (DE)
(86) Internationale Anmeldenummer: PCT/EP2016/000732
(87) Internationale Veröffentlichungsnummer: WO 2016/184545

(56) Entgegenhaltungen:
- EP-A2- 1 512 591
- WO-A1-2011/072836
- WO-A1-2016/134835
- DE-A1- 102013 020 440
- DE-A1- 19 953 864
- DE-B3- 102011 100 188
- GB-A- 2 463 652

## Beschreibung

Die Erfindung betrifft eine Brennkraftmaschine mit wenigstens einem Elektromotor gemäß dem Oberbegriff des Anspruchs 1.

Eine solche Brennkraftmaschine ist aus der DE 10 2013 020 440 A1 bekannt.

Bei bisherigen Hybridkonzepten sind die Komponenten (elektrische E-Maschinen) meist für die getriebeseitige Aufnahme konzipiert. Die Motorarchitektur der heutigen Verbrennungsmotoren ist weitestgehend durch die klassische Anordnung der Systemkomponenten bestimmt, deren bestehende Schnittstellen für zukünftige Technologien wie z. B nahtlose Hybridisierung konzeptionell nicht umfassend vorbereitet sind. Diese Tatsache stellt jegliche nachträgliche Hybrid-Applikation vor eine große technische und wirtschaftliche Herausforderung.

Das heißt, mit steigenden Kundenanforderungen und Applikationen in Bezug auf die Vielfalt der Hybridsysteme wird es immer schwieriger, mit einem traditionellen Konzept des Basismotors diese Aufgaben mit vertretbarem Aufwand zu bewältigen.

Die Aufgabe der vorliegenden Erfindung ist es, diese Komponenten in den Verbrennungsmotor derart zu integrieren, um die Vielzahl möglicher Kundenapplikationen mit oder ohne spezieller Getriebevarianten abdecken zu können und das Kundenspektrum für die Zukunft zu erweitern.

Die Aufgabe wird durch eine Brennkraftmaschine mit den Merkmalen des Anspruchs 1 gelöst. Beispielhafte Ausführungsformen ergeben sich aus den abhängigen Ansprüchen.

Eine weitere vorteilhafte Ausgestaltung sieht vor, dass einer des wenigstens einen Elektromotors als Generator ausgebildet ist. Hierbei ist von Vorteil, dass überflüssig erzeugte Energie z. B. in Batterien gespeichert werden kann.

Eine andere vorteilhafte Ausgestaltung sieht vor, dass ein Common-Rail in einem Zylinderkopfdeckel der Brennkraftmaschine angeordnet ist. Dies hat Bauraum- und Montagevorteile.

Eine vorteilhafte Ausgestaltung sieht vor, dass ein Kabelbaum im Zylinderkopfdeckel angeordnet ist. Dies hat ebenfalls Bauraum- und Montagevorteile.

Eine weitere vorteilhafte Ausgestaltung sieht vor, dass das Steuergerät auf oder am Zylinderkopfdeckel angeordnet ist. Dies hat ebenfalls Bauraum- und Montagevorteile.

Eine andere vorteilhafte Ausgestaltung sieht vor, dass das Steuergerät leitungslos mit dem im Zylinderkopfdeckel integrierten Kabelbaum verbindbar ist. Dies hat ebenfalls Bauraum- und Montage- und Servicevorteile.

Eine vorteilhafte Ausgestaltung sieht vor, dass ein Motorölkühler seitlich am Kurbelgehäuse in etwa in der Höhe und räumlich hinter einem des wenigstens einen Elektromotors angeordnet ist, insbesondere auf einer Abgasseite der Brennkraftmaschine. Dies hat Bauraum- und Montage- und Servicevorteile.

Eine weitere vorteilhafte Ausgestaltung sieht vor, dass ein Abgasrückführ (AGR)-Modul seitlich am Kurbelgehäuse oberhalb des Motorölkühlers angeordnet ist, insbesondere auf der Abgasseite der Brennkraftmaschine. Dies hat Bauraum- und Montage- und Servicevorteile.

Eine andere vorteilhafte Ausgestaltung sieht vor, dass eine Hochdruckpumpe seitlich am Zylinderkopf, insbesondere auf einer Serviceseite der Brennkraftmaschine derart angeordnet ist, dass sie leitungslos mit einem im Zylinderkopfdeckel angeordneten Common-Rail verbindbar ist. Dies hat Bauraum- und Montage- und Servicevorteile.

Eine andere vorteilhafte Ausgestaltung sieht vor, dass wenigstens eine Hydraulikpumpe unterhalb des seitlich am Kurbelgehäuse angeordneten Elektromotors angeordnet ist und, wie der Elektromotor, über ein Getriebe an den stirnseitigen Rädertrieb angeordnet ist. Dies hat Bauraum- und Montage- und Servicevorteile und erhöht die Applikationsmöglichkeiten.

Weitere Vorteile der Erfindung sind ein verstärktes Kurbelgehäuse mit definierter Kraftanbindung. Die Funktion des vorderen Deckels wird im Kurbelgehäuse integriert. Verstärktes Triebwerk und Rädertrieb mit spezieller Lagerung (die Kurbelwelle weist zum Schwungrad und zum Rand jeweils größeres Lager); Design des Motors für die Blockbauweise als tragende Einheit für die Anbindung vorwärts, rückwärts und seitwärts konzipiert;
(zusammen mit einer Gussölwanne wird der Motor zum tragenden Bauteil);

Anbindungsmöglichkeiten diverser Hybridsysteme für Industriebereich gegeben; das Design mit Verbrennungsmotoren unterschiedlicher Zylinder-Anzahl, z. B. 4 und 6 kompatibel (die Außengeometrie des Drehschwingungsdämpfers weist Funktionstrennung auf); Anpassung im Kühlmittel- und Ölkreislauf, optimiert hinsichtlich Druckverlust; multifunktionales Vorsatzgetriebe für High Speed E-Maschine und PTO mit Kupplung und leitungsloser Ölversorgung über Steckverbindungen; riemenloser Motor mit durchgehend elektrifizierten Nebenaggregaten als Option; konsequente Funktionstrennung und Verteilung der Systemkomponenten nach strengen Sicherheitskriterien und Service-Anforderungen für den bestmöglichen Kundennutzen.

In einer bevorzugten Ausgestaltung ist vorgesehen, dass die Hochdruckpumpe von einem Schall-, Tritt- bzw. Schlagschutzkäfig umgeben ist.

Die Erfindung wird im Folgenden anhand eines Ausführungsbeispiels näher erläutert, es zeigen:
- Figur 1: die Serviceseite der Brennkraftmaschine
- Figur 2: die Abgasseite der Brennkraftmaschine
- Figur 3: die einzelnen Bauraumbereiche.
- Figur 4: eine Draufsicht in den Zylinderkopf

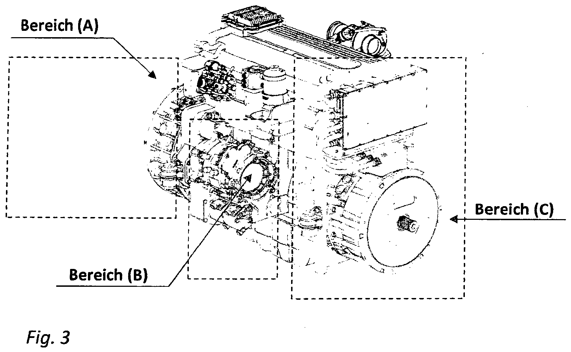

Die grundsätzliche Idee besteht darin, das gesamte System hinsichtlich Baugruppenanordnung und Auslegung der Komponenten so zu modifizieren, dass die Komplexität des Grundmotors im Design einerseits abnimmt und gleichzeitig, durch gewonnene Freiheitsgrade und neue verstärkte Schnittstellen, zwecks einfacherer Integration ausgenutzt werden kann. Damit können generell drei Bauraumbereiche für die Aufnahme der jeweiligen Hybridsysteme dargestellt werden (Bsp. siehe Figur 3):
- (A) Bereich Schwungrad & SAE
- (B) Bereich Serviceseite & PTO
- (C) Bereich Lüfter & Riementrieb

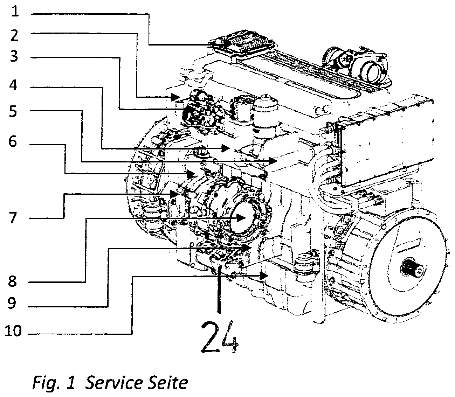

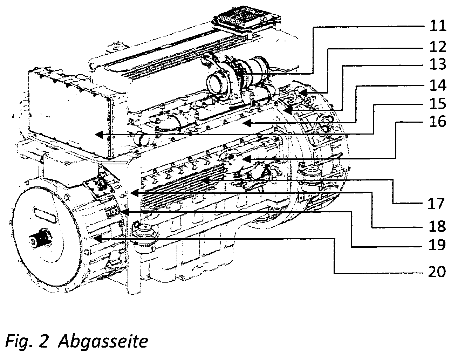

Die Erfindung betrifft die gesamte aufeinander abgestimmte und ineinandergreifende Anordnung der Systemkomponenten. Bei dieser vorteilhaften Ausführungsform, mit klarer Funktionstrennung, werden alle Schlüssel- Baugruppen so segmentiert und neu kombiniert, dass dabei eine sehr hohe Funktionsdichte bei der optimalen und kompakten Bauraumausnutzung erreicht werden kann. In Figur 1 und Figur 2 wird ein obenliegendes Steuer- gerät 1 gezeigt, mit einem direkten Kabelkanal, der entweder parallel zum Zylinderkopfdeckel oder innerhalb des Zylinderkopfdeckels angeordnet ist. Es gibt die Kabelkanal-Variante mit oder ohne Staub- bzw. Wasserschutz. Der Zylinderkopf 2 ist im Cross Flow Design konzipiert und beinhaltet Common-Rail-Injektoren 25 mit Hochdruckleitungen und staubgeschützter Ummantelung diverser Komponenten des Einspritzsystems. Des Weiteren verfügt der Zylinderkopf 2 über Sensoren, Schnittstellen und Anbindungs- punkte für die Abgasnachbehandlung (EAT-System). Die Kunden-Verrohrungs-Anbindung(KVA) weist optional obenliegende Lüfter-Lagerung, Motortrittschutz und Motortransport-Halterung sowie eine obenliegende Hochdruckpumpe 3 auf, die direkt am Zylinderkopf mit oder ohne Akustikschutz angebunden ist bzw. sind. Das Kurbelgehäuse 4 ist mit oder ohne Funktion der Aufteilung des Kühlmittelkreislaufes, dem sogenannten Split Cooling ausgeführt. Die geschlossene Ölwannenkontur ohne Unterbrechung der Dichtung führt zu einem verstärkten Triebwerk und einem verstärkten Rädertrieb. Die AGR-Rückführung ist auf der Abgasseite der Brennkraftmaschine angeordnet. Es existieren Schnittstellen für die Anbaukomponenten und die Motorlagerung. Das Filter Modul 5 für Kraftstoff und Öl ist losgelöst von der Funktion der Öl-Kühlung. Das Power Take Off (PTO) Modul (B) 6 ist direkt am Kurbelgehäuse 4 angebaut. Das Vorsatzgetriebe 7, ist beispielsweise ein Stirnradgetriebe für eine schnellere Übersetzung - mit oder ohne elastischer Kupplung. Die Brennkraftmaschine weist eine staubgeschützte Aufnahme der E-Maschine (System High Speed) auf. Weiter weist die Brennkraftmaschine eine direkte leitungslose Ölversorgung über Steckelemente auf. Die E-Maschine 8 (System High Speed) ist für den Heavy Duty Bereich; staubgeschützt ausgeführt. Die Abstützkonsole 9 mit Toleranzausgleich ist direkt am Kurbelgehäuse angebunden. Die Ölwanne 10 ist im Akustikverhalten optimiert und als Blech, Guss oder Kunststoff teil ausgeführt. Die Abgasleitung und der ATL 11 kann in diversen Anbaupositionen realisiert werden. Das AGR-Modul-System 14 kann mit oder ohne integrierter Stelleinheit realisiert und im Kurbelgehäuse voll integriert sein, es ist direkt und strömungsgünstig mit dem Kühlkreislaufsystem verbunden, ohne Haltekonsole und ohne Kühlmittelleitungen, mit der Abgasrückführung im Kurbelgehäuse, die je nach Abgasstufe im Funktionsumfang skalierbar ist. Die E-Maschine 12 (System Mild Hybrid) in der Ausführung für den Heavy Duty Bereich ist staubgeschützt. Die Adaptereinheit 13 (SAE-Bereich) für die direkte Anbindung der E-Maschine ist zentriert am Kurbelgehäuse angeordnet. Der HochvoltUmrichter 15 ist an der Frontplatte weichgelagert angebunden. Der Anlasser 16 kann mit oder ohne Staubschutz bzw. mit oder ohne Wasserschutz ausgeführt sein. Der Motorölkühler 17 ist voll im Kurbelgehäuse integriert und direkt und strömungsgünstig mit dem Kühlkreislaufsystem verbunden. Die Frontplatte 18 ist direkt verbunden und am Kurbelgehäuse zentriert angeordnet. Die Adaptereinheit 19 ist im Bereich Lüfter & Riementrieb für die direkte Anbindung der E-Maschine 20 zentriert am Kurbelgehäuse angeordnet. In der Ausführung für den Heavy Duty Bereich ist die E-Maschine 20 und die Adaptereinheit 19 staubgeschützt angeordnet.

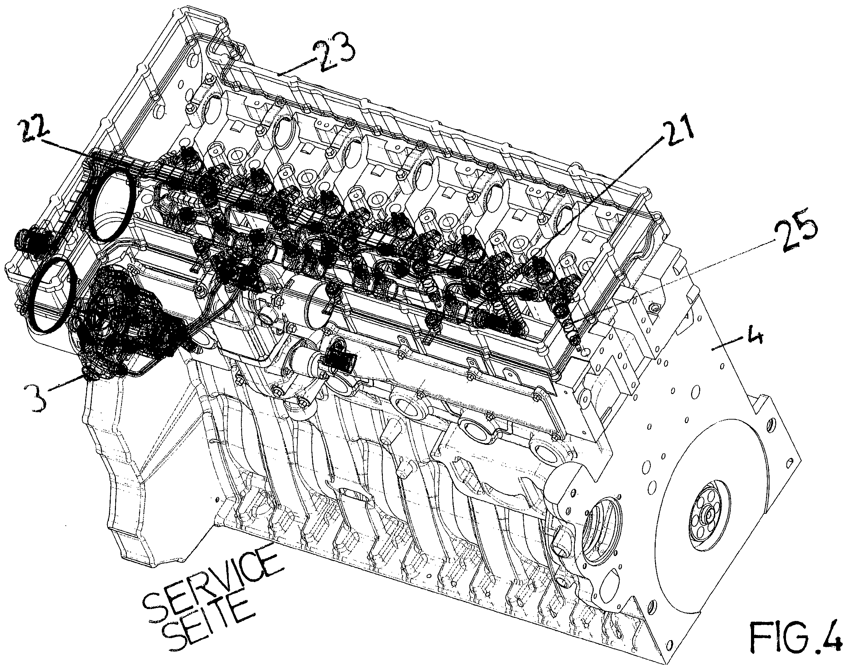

Figur 1 stellt das Steuergerät 1 auf dem Zylinderkopfdeckel 23 dar, der mit dem parallel zum Zylinderkopfdeckel 23 angeordneten Kabelbaumkanal 22 verbunden ist. Am Zylinderkopf 2 ist die Dieselhochdruckpumpe 3 im Wesentlichen leitungslos mit dem nicht sichtbaren und in Figur 4 gezeigten dargestellten Common-Rail 21 verbunden. Das Filtermodul 5 ist am Kurbelgehäuse 4 auf der Service-Seite angeordnet. Auf der Service-Seite unterhalb der Dieselhochdruckpumpe 3 ist der sogenannte Power Take Off (PTO) 6 oberhalb von Vorsatzgetriebe 7 angeordnet. Am Vorsatzgetriebe 7 ist der Elektromotor 8 angeordnet, wobei das Vorsatzgetriebe 7 am stirnseitigen Rädertrieb angeordnet ist. Die Abstützkonsole 9 stützt den Elektromotor 8 und grenzt an die Hydraulikpumpe 24. Unterhalb des Kurbelgehäuses 4 ist die Ölwanne 10 angeordnet.

Figur 2 zeigt den Motor aus Figur 1 von seiner Abgasseite, in etwa in Höhe des Zylinderkopfdeckels 23 bzw. des Zylinderkopfes 2 ist die Abgasleitung und der Abgasturbolader (ATL) 11 angeordnet. Der Elektromotor 12 ist mittels einer SAE-Adaptereinheit 13 an einer Stirnseite der Brennkraftmaschine angeordnet. Das AGR-Modul 14 ist unterhalb der Abgasleitung und des Abgasturboladers (ATL) 11 und oberhalb von Elektromotor/Anlasser 16 und Motorölkühler 17 in etwa in Höhe des Zylinderkopfs 2 angeordnet. Der Hochvoltumrichter 15 ist an der anderen Stirnseite der Brennkraftmaschine oberhalb von Adaptereinheit 19 und Elektromotor 20 angeordnet und leitungsmäßig mit dem Elektromotor 20 verbunden. An der anderen Stirnseite des Kurbelgehäuses ist eine Frontplatte 18 angeordnet.

In Figur 3 wird der Motor aus Figur 1 und Figur 2 in drei Bereiche A, B und C aufgeteilt dargestellt, wobei Bereich A die eine Stirnseite darstellt und Bereich C die andere Stirnseite des Motors bzw. der Brennkraftmaschine. Der Bereich B umfasst im Wesentlichen den Service-Seitenbereich der Brennkraftmaschine um den Elektromotor 8.

In Figur 4 wird die Anordnung der Dieselhochdruckpumpe 3 dargestellt, die im Wesentlichen leitungslos mit dem Common-Rail 21 verbunden ist.

Der geöffnete Zylinderkopf sitzt auf dem Kurbelgehäuse 4 und zeigt den Kabelbaum 22, der unter dem Zylinderkopfdeckel 23 angeordnet ist. Unter dem Zylinderkopfdeckel 23 ragen Injektoren 25 in den Zylinderkopf zur Versorgung der Brennkraftmaschine mit Kraftstoff hinein, wobei die Injektoren vom Common-Rail 21 mit Kraftstoff versorgt werden.

### Bezugszeichenliste

1 Steuergerät
2 Zylinderkopf
3 Dieselhochdruckpumpe
4 Kurbelgehäuse
5 Filtermodul
6 Power Take Off(PTO)
7 Vorsatzgetriebe
8 Elektromotor
9 Abstützkonsole
10 Ölwanne
11 Abgasleitung und Abgasturbolader (ATL)
12 Elektromotor
13 SAE-Adaptereinheit
14 AGR-Modul
15 Hochvoltumrichter
16 Elektromotor/Anlasser
17 Motorölkühler
18 Frontplatte
19 Adaptereinheit
20 Elektromotor
21 Common-Rail
22 Kabelbaum
23 Zylinderkopfdeckel
24 Hydraulikpumpe
25 Injektor

## Patentansprüche

1. Brennkraftmaschine, umfassend
wenigstens einen am Kurbelgehäuse der Brennkraftmaschine angeordneten Elektromotor (8, 13, 16, 20),
wenigstens ein Steuergerät (1) zur Steuerung von Brennkraftmaschine und/oder Elektromotor,
wenigstens einen Hochvoltumrichter (15), der an einer Stirnseite der Brennkraftmaschine oberhalb von einer Adaptereinheit (19) und einem des zumindest einen Elektromotors (20) angeordnet und leitungsmäßig mit dem Elektromotor (20) verbunden ist, wobei die Adaptereinheit (19) in einem Bereich eines Lüfter- und Riementriebs für die direkte Anbindung des Elektromotors (20) zentriert am Kurbelgehäuse angeordnet ist, und wenigstens ein direkt am Kurbelgehäuse (4) angebautes Power Take Off (PTO) Modul (6), das antriebsmäßig mit einem Vorsatzgetriebe (7) verbunden ist, das an einem stirnseitigen Rädertrieb angeordnet ist, wobei ein weiterer des wenigstens einen Elektromotors (8) mit dem Vorsatzgetriebe (7) antriebsverbunden ist.

2. Brennkraftmaschine nach Anspruch 1,
**dadurch gekennzeichnet, dass** einer des wenigstens einen Elektromotors als Anlasser (8, 13, 16, 20) ausgebildet ist.

3. Brennkraftmaschine nach einem oder mehreren der vorgenannten Ansprüche,
**dadurch gekennzeichnet, dass** einer des wenigstens einen Elektromotors (8, 13, 16, 20) als Generator ausgebildet ist.

4. Brennkraftmaschine nach einem oder mehreren der vorgenannten Ansprüche,
**dadurch gekennzeichnet, dass** die Brennkraftmaschine ferner einen Common-Rail und einen Zylinderkopfdeckel umfasst, wobei der Common-Rail im Zylinderkopfdeckel angeordnet ist.

5. Brennkraftmaschine nach Anspruch 4,
**dadurch gekennzeichnet, dass** ein Kabelbaum im Zylinderkopfdeckel angeordnet ist.

6. Brennkraftmaschine nach Anspruch 5,
**dadurch gekennzeichnet, dass** das Steuergerät (1) auf oder am Zylinderkopfdeckel angeordnet ist.

7. Brennkraftmaschine nach Anspruch 5 oder 6,
**dadurch gekennzeichnet, dass** das Steuergerät (1) leitungslos mit dem im Zylinderkopfdeckel integrierten Kabelbaum verbindbar ist.

8. Brennkraftmaschine nach einem oder mehreren der vorgenannten Ansprüche,
**dadurch gekennzeichnet, dass** ein Motorölkühler (17) seitlich am Kurbelgehäuse in etwa der Höhe und räumlich hinter einem des wenigstens einen Elektromotors (16) angeordnet ist, insbesondere auf einer Abgasseite der Brennkraftmaschine.

9. Brennkraftmaschine nach Anspruch 8,
**dadurch gekennzeichnet, dass** ein Abgasrückführ(AGR)-Modul seitlich am Kurbelgehäuse oberhalb des Motorölkühlers (17) angeordnet ist, insbesondere auf einer Abgasseite der Brennkraftmaschine.

10. Brennkraftmaschine nach einem oder mehreren der vorgenannten Ansprüche,
**dadurch gekennzeichnet, dass** eine Hochdruckpumpe seitlich an einem Zylinderkopf der Brennkraftmaschine, insbesondere auf einer Serviceseite der Brennkraftmaschine derart angeordnet ist, dass sie leitungslos mit einem im Zylinderkopfdeckel angeordneten Common-Rail verbindbar ist.

11. Brennkraftmaschine nach einem oder mehreren der vorgenannten Ansprüche,
**dadurch gekennzeichnet, dass** wenigstens eine Hydraulikpumpe unterhalb des seitlich am Kurbelgehäuse angeordneten Elektromotors (8) angeordnet ist und wie der Elektromotor (8) über ein Getriebe an den stirnseitigen Rädertrieb angeordnet ist.

## Claims

1. Internal combustion engine, comprising
at least one electric motor (8, 13, 16, 20) arranged on the crankcase of the internal combustion engine,
at least one controller (1) for controlling the internal combustion engine and/or the electric motor,
at least one high-voltage inverter (15), which is arranged on a front end of the internal combustion engine above an adapter unit (19) and one of the at least one electric motors (20) and is connected in conduction terms to the electric motor (20), wherein the adapter unit (19) is arranged centred on the crankcase in a region of a fan and belt drive for the direct attachment of the electric motor (20), and at least one power take-off (PTO) module (6), which is attached directly to the crankcase (4) and is connected in drive terms to a gear reducer (7), which is arranged on a front-end gear drive, wherein a further one of the at least one electric motors (8) is driveconnected to the gear reducer (7).

2. Internal combustion engine according to Claim 1,
**characterized in that** one of the at least one electric motors is formed as a starter motor (8, 13, 16, 20).

3. Internal combustion engine according to one or more of the preceding claims,
**characterized in that** one of the at least one electric motors (8, 13, 16, 20) is formed as a generator.

4. Internal combustion engine according to one or more of the preceding claims,
**characterized in that** the internal combustion engine also comprises a common rail and a cylinder head cover, wherein the common rail is arranged in the cylinder head cover.

5. Internal combustion engine according to Claim 4,
**characterized in that** a cable harness is arranged in the cylinder head cover.

6. Internal combustion engine according to Claim 5,
**characterized in that** the controller (1) is arranged on top of or on the cylinder head cover.

7. Internal combustion engine according to Claim 5 or 6,
**characterized in that** the controller (1) can be connected in a cableless manner to the cable harness integrated in the cylinder head cover.

8. Internal combustion engine according to one or more of the preceding claims,
**characterized in that** an engine-oil cooler (17) is arranged laterally on the crankcase approximately at the height of and spatially behind one of the at least one electric motors (16), in particular on an exhaust side of the internal combustion engine.

9. Internal combustion engine according to Claim 8,
**characterized in that** an exhaust-gas recirculation (EGR) module is arranged laterally on the crankcase above the engine-oil cooler (17), in particular on an exhaust side of the internal combustion engine.

10. Internal combustion engine according to one or more of the preceding claims,
**characterized in that** a high-pressure pump is arranged laterally on a cylinder head of the internal combustion engine, in particular on a service side of the internal combustion engine, in such a way that it can be connected in a cableless manner to a common rail arranged in the cylinder head cover.

11. Internal combustion engine according to one or more of the preceding claims,
**characterized in that** at least one hydraulic pump is arranged under the electric motor (8) arranged laterally on the crankcase and, like the electric motor (8) is arranged via a gear mechanism on the front-end gear drive.

## Revendications

1. Moteur à combustion interne, comprenant
au moins un moteur électrique (8, 13, 16, 20) agencé sur le carter de vilebrequin du moteur à combustion interne, au moins un appareil de commande (1) pour commander le moteur à combustion interne et/ou le moteur électrique,
au moins un convertisseur haute tension (15), qui est agencé sur un côté frontal du moteur à combustion interne au-dessus d'une unité d'adaptation (19) et d'un desdits au moins un moteurs électriques (20) et qui est relié par des éléments conducteurs au moteur électrique (20), l'unité d'adaptation (19) étant agencée de manière centrée sur le carter de vilebrequin dans une zone d'un ventilateur et d'un système d'entraînement par courroie pour le raccordement direct du moteur électrique (20), et au moins un module de prise de force (« Power Take Off », PTO) (6) monté directement sur le carter de vilebrequin (4), qui est relié en entraînement à un mécanisme de transmission (7) agencé sur un train d'engrenages de côté frontal, un autre desdits au moins un moteur électrique (8) étant relié en entraînement au mécanisme de transmission (7).

2. Moteur à combustion interne selon la revendication 1,
**caractérisé en ce que** l'un des au moins un moteurs électriques est conçu sous la forme d'un démarreur (8, 13, 16, 20).

3. Moteur à combustion interne selon une ou plusieurs des revendications précédentes,
**caractérisé en ce que** l'un desdits au moins un moteurs électriques (8, 13, 16, 20) est conçu sous la forme d'un générateur.

4. Moteur à combustion interne selon une ou plusieurs des revendications précédentes,
**caractérisé en ce que** le moteur à combustion interne comprend en outre une rampe commune (« Common-Rail ») et un couvercle de culasse, la rampe commune étant agencée dans le couvercle de culasse.

5. Moteur à combustion interne selon la revendication 4,
**caractérisé en ce qu'**un faisceau de câbles est agencé dans le couvercle de culasse.

6. Moteur à combustion interne selon la revendication 5,
**caractérisé en ce que** l'appareil de commande (1) est agencé sur ou contre le couvercle de culasse.

7. Moteur à combustion interne selon la revendication 5 ou la revendication 6,
**caractérisé en ce que** l'appareil de commande (1) peut être connecté sans conducteurs au faisceau de câbles intégré dans le couvercle de culasse.

8. Moteur à combustion interne selon une ou plusieurs des revendications précédentes,
**caractérisé en ce qu'**un refroidisseur d'huile moteur (17) est agencé latéralement sur le carter de vilebrequin, approximativement à la hauteur de l'un desdits au moins un moteur électrique (16), et dans l'espace situé derrière celui-ci, en particulier sur un côté échappement du moteur à combustion interne.

9. Moteur à combustion interne selon la revendication 8,
**caractérisé en ce qu'**un module de recirculation des gaz d'échappement (AGR) est agencé latéralement sur le carter de vilebrequin au-dessus du refroidisseur d'huile moteur (17), en particulier sur un côté échappement du moteur à combustion interne.

10. Moteur à combustion interne selon une ou plusieurs des revendications précédentes,
**caractérisé en ce qu'**une pompe haute pression est agencée latéralement sur une culasse du moteur à combustion interne, en particulier sur un côté de service du moteur à combustion interne, de telle sorte qu'elle puisse être reliée sans conduite à une rampe commune agencée dans le couvercle de la culasse.

11. Moteur à combustion interne selon une ou plusieurs des revendications précédentes,
**caractérisé en ce qu'**au moins une pompe hydraulique est agencée en dessous du moteur électrique (8) sur le côté du carter de vilebrequin et est reliée, comme le moteur électrique (8), au train d'engrenages de côté frontal par l'intermédiaire d'un engrenage d'entraînement.
